(19) **Europäisches Patentamt European Patent Office Office européen des brevets**

(11) **EP 4 599 242 B1**

(12) **FASCICULE DE BREVET EUROPEEN**

(45) Date de publication et mention de la délivrance du brevet:
**22.07.2026 Bulletin 2026/30**

(21) Numéro de dépôt: **23782208.5**

(22) Date de dépôt: **27.09.2023**

(51) Classification Internationale des Brevets (IPC):
**G01N 29/04** *(2006.01)* **G01N 29/06** *(2006.01)*
**G01N 29/14** *(2006.01)* **G01N 29/44** *(2006.01)*

(52) Classification Coopérative des Brevets (CPC):
**G01N 29/0672; G01N 29/043; G01N 29/14; G01N 29/4472;** G01N 2291/0258; G01N 2291/0289; G01N 2291/106

(86) Numéro de dépôt international:
**PCT/EP2023/076770**

(87) Numéro de publication internationale:
**WO 2024/074379 (11.04.2024 Gazette 2024/15)**

(54) **PROCÉDÉ ET SYSTÈME D'OPTIMISATION BI-NIVEAU DE LA LOCALISATION DE CAPTEURS DE DÉTECTION DE DÉFAUT(S) DANS UNE STRUCTURE PAR TOMOGRAPHIE À ONDES ÉLASTIQUES GUIDÉES**

VERFAHREN UND SYSTEM ZUR ZWEISTUFIGEN OPTIMIERUNG DER LAGE VON SENSOREN ZUR DETEKTION EINES ODER MEHRERER DEFEKTE IN EINER STRUKTUR MITTELS ELASTISCHER GEFÜHRTER WELLENTOMOGRAFIE

METHOD AND SYSTEM FOR BI-LEVEL OPTIMISATION OF THE LOCATION OF SENSORS FOR DETECTING ONE OR MORE DEFECTS IN A STRUCTURE USING ELASTIC GUIDED WAVE TOMOGRAPHY

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **04.10.2022 FR 2210141**

(43) Date de publication de la demande:
**13.08.2025 Bulletin 2025/33**

(73) Titulaire: **Commissariat à l'Energie Atomique et aux Energies Alternatives
75015 Paris (FR)**

(72) Inventeurs:
• **WAGUET, Arthur
91191 Gif-sur-Yvette Cedex (FR)**
• **MESNIL, Olivier
91191 Gif-sur-Yvette Cedex (FR)**
• **DRUET, Tom
91191 Gif-sur-Yvette Cedex (FR)**
• **CIUCIU, Philippe
91191 Gif-sur-Yvette Cedex (FR)**

(74) Mandataire: **Lavoix
2, place d'Estienne d'Orves
75441 Paris Cedex 09 (FR)**

(56) Documents cités:
**FR-A1- 3 084 748   US-A1- 2013 263 667**

• **CHANG MING ET AL: "Corrosion monitoring using a new compressed sensing-based tomographic method", ULTRASONICS, IPC SCIENCE AND TECHNOLOGY PRESS LTD. GUILDFORD, GB, vol. 101, 28 August 2019 (2019-08-28), pages 1 - 11, XP085942551, ISSN: 0041-624X, [retrieved on 20190828], DOI: 10.1016/J.ULTRAS.2019.105988**

**EP 4 599 242 B1**

**Description**

La présente invention concerne un procédé d'optimisation bi-niveau de la localisation d'un ensemble de capteurs de détection de défaut(s) dans une structure par tomographie à ondes élastiques guidées.

L'invention concerne également un programme d'ordinateur comportant des instructions logicielles qui, lorsqu'elles sont exécutées par un ordinateur, mettent en œuvre un tel procédé d'optimisation bi-niveau de la localisation d'un ensemble de capteurs de détection de défaut(s) dans une structure par tomographie à ondes élastiques guidées.

L'invention concerne également un dispositif électronique d'optimisation bi-niveau de la localisation d'un ensemble de capteurs de détection de défaut(s) dans une structure par tomographie à ondes élastiques guidées.

La présente invention concerne le domaine du contrôle de santé de structure ou SHM (de l'anglais *Structural Health Monitoring*) visant à détecter et à caractériser, de manière planifiée ou de manière périodique, des dommages (i.e. anomalies) de structures/infrastructures, ainsi que celui du contrôle non destructif (CND) par mesure sur demande. De telles anomalies (i.e. défauts) de structure correspondent à des modifications des propriétés physiques et/ou géométriques de la structure considérée propre à en affecter les performances et/ou la fiabilité.

Un tel contrôle de santé de structures, ou un tel contrôle non destructif (CND), sont mis en œuvre par instrumentation desdites structures à contrôler, respectivement à l'aide de capteurs intégrés ou amovibles, par exemple des capteurs piézoélectriques propres à émettre et recevoir des ondes élastiques guidées (OG) ultrasonores, et ce de manière permanente pour contrôler leur état de santé au cours du temps ou à un instant donné.

L'intégration permanente de capteurs sur ou au sein de structures/infrastructures pour surveiller leur état permet notamment de garantir la sécurité des structures porteuses correspondant à des composants mécaniques fin et/ou long, tels que des pâles d'éoliennes, les fuselages ou composants de moteurs d'avion, des tuyaux métalliques ou composite, des câbles de tension, les câbles de suspension de pont, des rails de train, ou toute autre structure à surveiller du secteur « Oil & Gas », nucléaire, aéronautique, etc..

En particulier, les ondes ultrasonores élastiques guidées, émises par de tels capteurs, permettent de détecter les défauts structurels menant à des discontinuités ou à des variations de géométrie, tels que des fissures, des délaminages dans des fuselages composites, de la corrosion menant notamment à une perte d'épaisseur dans des métaux, et/ou l'érosion etc., et ce à un stade précoce et ainsi de les surveiller pendant des décennies.

Une telle détection est généralement bien maitrisée en laboratoire où les effets extérieurs sont limités, maitrisés et calibrés.

Le principal challenge associé à un tel diagnostic de structure, est, en conditions réelles, lié d'une part à la présence d'incertitudes épistémiques sur la structure ou l'instrumentation telles que les positions des capteurs, les propriétés des capteurs, les propriétés élastiques ou géométriques de la structure, et d'autre part lié à la présence d'effets externes d'influence non supervisés (i.e. inconnus) évoluant avec des dynamiques temporelles distinctes.

A titre d'alternative aux approches classiques par état de référence, c'est-à-dire une mesure de référence en l'absence de défaut puis en comparant l'état courant à l'état de référence, notamment par soustraction, corrélation, etc. tout en supposant que la seule différence entre états de référence et courant ne peut être attribuée qu'à la présence d'un défaut, mais que tous les autres paramètres d'utilisation, hormis au mieux un seul paramètre d'effet rapide tel que la température, sont égaux entre ces deux états de référence et courant, des procédés de reconstruction par imagerie, notamment de type tomographie par ondes élastiques guidées (OG) permettent actuellement de reconstruire, via un algorithme d'inversion itératif, à partir des résultats fournis par lesdits capteurs, une cartographie de l'épaisseur de la structure et donc d'imager de potentiels endommagements/défauts.

La tomographie par ondes élastiques guidées (OG) repose notamment sur des modèles de propagation d'onde, par exemple, la tomographie par rayonnement, la tomographie en temps de vol, telle notamment décrite par J. C. P McKeon et M. K. Hinders dans l'article intitulé « Parallel projection and crosshole Lamb contact scanning tomography » de 1999 et la tomographie par diffraction, telle notamment décrite par F. Simonetti et H. Huang dans l'article intitulé « From beamforming to diffraction tomography » de 2008.

De plus, grâce à des méthodes d'autocalibration notamment décrites par T. Druet dans l'article intitulé « Autocalibration method for guided wave tomography with undersampled data » de 2019, la tomographie a le potentiel d'être plus robuste que les approches par état de référence puisque la reconstruction des défauts est faite uniquement à partir de l'état courant (i.e. signaux mesurés sur une structure présentant déjà un potentiel défaut).

Cependant, en tomographie, des critères théoriques sont utilisés pour déterminer le nombre de capteurs nécessaires en théorie pour atteindre une reconstruction de défaut optimale, nombre qui est le plus souvent très important et supérieur à celui requis par les approches classiques par état de référence, et par conséquent prohibitif pour beaucoup d'application SHM notamment en termes de coût, de masse ajoutée et/ou de complexité d'intégration.

En effet, à titre d'exemple non limitatif, en environnement de laboratoire et pour contrôler une zone de l'ordre du $m^2$, les approches classiques par état de référence demandent de l'ordre de dix capteurs, tandis que les méthodes de tomographie demandent de l'ordre de cent capteurs (pour atteindre la résolution et précision maximale permise par la méthode de tomographie.

Ainsi, le principal écueil de la tomographie par ondes élastiques guidées (OG) est le nombre de capteurs requis et la résolution théorique maximale, en considérant par exemple qu'une résolution spatiale d'une demi longueur d'onde serait atteinte avec cent-vingt capteurs (autrement dit en considérant une distance inter-capteur inférieure ou égale à une demi longueur d'onde, le nombre de capteurs minimal est égal au périmètre de la zone à inspecter divisé par ladite distance inter-capteurs).

En pratique, pour utiliser la tomographie par ondes élastiques guidées (OG), le nombre de capteurs utilisé est bien souvent volontairement diminué pour respecter les contraintes de coût, masse ajoutée et/ou complexité du système SHM énoncées précédemment, mais cela mène évidemment en contrepartie à des reconstructions dégradées des défauts.

Pour y remédier, des méthodes de tomographie couplées à une acquisition comprimée (CS de l'anglais *Compressed Sensing*) ont été développées tel que notamment décrit par M. Chang et al. dans l'article intitulé « Corrosion monitoring using a new compressed sensing-based tomographic method » de 2020, et sont basées sur la mise en œuvre d'un traitement du signal (i.e. traitement de données) propre à reconstruire des données échantillonnées sous la fréquence de Nyquist (i.e. respectant le critère de S, ce qui revient spécifiquement en SHM à reconstruire une image par tomographie en utilisant un nombre réduit et limité de capteurs piézoélectriques propres à émettre et recevoir des ondes élastiques guidées (OG), tout en gardant des qualités de reconstructions des défauts maximales.

Toutefois, ces derniers développements présentent généralement une résolution encore inférieure à celle associée à la tomographie par diffraction.

De plus, en acquisition comprimée (CS de l'anglais *Compressed Sensing*), il est connu qu'un processus de mesure aléatoire/incohérent est plus favorable à la reconstruction qu'un échantillonnage régulier.

Le but de cette invention est donc de proposer un procédé et un dispositif propres à fournir un diagnostic précoce et fiable de défaut structurel en conditions réelles d'utilisation, en s'affranchissant d'une état de référence (i.e. de manière absolue), tout en étant robuste et en fournissant une imagerie de défauts la plus fidèle possible, et ce, en limitant le nombre de capteurs nécessaires à maintenir une qualité de reconstruction maximale, notamment dans un contexte de tomographie par diffraction.

A cet effet, l'invention a pour objet un procédé d'optimisation bi-niveau de la localisation d'un ensemble de capteurs de détection de défaut(s) dans une structure par tomographie à ondes élastiques guidées, les capteurs dudit ensemble étant disposés sur ladite structure,

ledit procédé comprenant une optimisation bi-niveau, ladite optimisation bi-niveau comprenant :

- une phase d'initialisation d'une configuration de détection de référence, et de génération d'une base de donnée comprenant respectivement un nombre prédéterminé N d'images de référence distinctes de cartographies de l'épaisseur de ladite structure présentant respectivement N défauts distincts d'une image à l'autre,

l'initialisation de la configuration de détection de référence comprenant la définition des éléments appartenant au groupe comprenant au moins les éléments suivants :

- la taille de zone de la structure à inspecter au moyen de ladite détection ;
- la longueur d'onde d'intérêt ;
- le positionnement initial desdits capteurs ;

et jusqu'à convergence selon un critère d'arrêt prédéterminé, au moins une itération des étapes successives suivantes :

- pour une localisation courante dudit ensemble de capteurs associée à ladite itération, et pour chacun desdits N défauts distincts, obtention, par simulation, de données propres à être mesurées par ledit ensemble de capteurs positionnés selon ladite localisation,
- à partir desdites données, et pour chacun desdits N défauts distincts, résolution et obtention d'une solution d'un problème bas-niveau de reconstruction par tomographie dudit défaut considéré, ladite solution correspondant à l'image reconstruite de la cartographie de l'épaisseur de ladite structure présentant ledit défaut considéré;
- à partir desdites N images reconstruites associées respectivement à chacun desdits N défauts distincts et à partir des N images de référence de la base de donnée associées respectivement à chacun desdits N défauts distincts, détermination d'un critère associé à un problème haut-niveau d'optimisation de la qualité de reconstruction desdits N défauts distincts, ledit critère correspondant à la somme des qualités de la reconstruction sur l'ensemble desdits N défauts distincts,
- détermination du gradient dudit critère associé au problème haut-niveau,

- déplacement de chaque capteur proportionnellement à la valeur dudit gradient dudit critère associée à chaque capteur et obtention de la localisation de chaque capteur à utiliser lors de l'itération suivante.

Ce procédé vise ainsi à apprendre au moyen d'une optimisation bi-niveau le placement de l'ensemble de capteurs qui permet de reconstruire au mieux les N défauts correctement caractérisés au préalable au sein de la base de données.

Autrement dit, lors de la génération de la base de données la cartographie de l'épaisseur de la structure à inspecter est rigoureusement obtenue pour chacun des N défauts, par simulation précise de chaque défaut, et le procédé selon la présente invention vise à apprendre au fur et à mesure des itérations le meilleur compromis de positionnement de l'ensemble des capteurs qui permet d'obtenir, pour l'ensemble des N défauts distincts, l'ensemble des N images reconstruites par tomographie approximant au mieux les N images de référence de la base de donnée respectivement associées à chaque défaut distincts.

En d'autres termes, le procédé selon la présente invention revient à considérer la position (i.e. la localisation) de l'ensemble des capteurs comme un paramètre de l'optimisation bi-niveau.

Suivant d'autres aspects avantageux de l'invention, le procédé d'optimisation bi-niveau de la localisation d'un ensemble de capteurs de détection de défaut(s) dans une structure par tomographie à ondes élastiques guidées comprend une ou plusieurs des caractéristiques suivantes, prises isolément ou suivant toutes les combinaisons techniquement possibles :

- ledit groupe comprend en outre au moins les éléments suivants :

  - le nombre de capteurs théoriquement nécessaires à ladite détection ;
  - le nombre de capteurs utilisés en pratique ;

- ledit positionnement initial desdits capteurs correspond à une disposition circulaire régulière desdits capteurs ;
- ladite phase d'initialisation comprend en outre l'obtention d'une asymétrie dudit positionnement initial par application d'un déplacement de valeur prédéterminée selon une direction aléatoire de chacun desdits capteurs ;
- la détermination du gradient dudit critère comprend :
  pour chacun desdits N défauts distincts :

  - la détermination, d'un double gradient dudit problème bas-niveau, par différenciation du gradient dudit problème bas-niveau en fonction de ses paramètres ;
  - la détermination d'une matrice hessienne associée en fonction des données respectivement issues de ladite base de donnée, ladite matrice hessienne étant inversible,
  - à partir de ladite matrice hessienne, la détermination d'une matrice jacobienne selon une relation d'obtention prédéterminée ; et
  - à partir de l'ensemble des matrices jacobiennes respectivement associées à chacun desdits N défauts distincts, détermination du gradient dudit critère.

- ledit critère d'arrêt prédéterminé correspond à :

  - une norme euclidienne du gradient du problème haut-niveau inférieure à un seuil prédéterminé ; ou
  - l'atteinte d'un nombre maximal d'itérations prédéterminé.

- ledit seuil prédéterminé correspond à une fraction prédéterminée de la longueur d'onde d'intérêt initialisée lors de la phase d'initialisation de ladite configuration de détection de référence ;
- ladite base de donnée est reconfigurable en fonction d'une information sur un type de défaut a priori à détecter.

L'invention a également pour objet un programme d'ordinateur comportant des instructions logicielles qui, lorsqu'elles sont exécutées par un ordinateur, mettent en œuvre un tel procédé d'optimisation par apprentissage de la localisation d'un ensemble de capteurs de détection de défaut(s) dans une structure par tomographie à ondes guidées tel que défini ci-dessus.

L'invention a également pour objet un dispositif d'optimisation par apprentissage de la localisation d'un ensemble de capteurs de détection de défaut(s) dans une structure par tomographie à ondes guidées les capteurs dudit ensemble étant disposés sur ladite structure, ledit dispositif comprenant une unité d'optimisation bi-niveau, ladite unité d'optimisation bi-niveau comprenant :

- un module d'initialisation configuré pour initialiser une configuration de détection de référence, et configuré pour générer une base de donnée comprenant respectivement un nombre prédéterminé N d'images de référence distinctes de cartographies de l'épaisseur de ladite structure présentant respectivement N défauts distincts d'une image à l'autre, l'initialisation de la configuration de détection de référence comprenant la définition des éléments appartenant au groupe comprenant au moins les éléments suivants :

- la taille de zone de la structure à inspecter au moyen de ladite détection ;
- la longueur d'onde d'intérêt ;
- le positionnement initial desdits capteurs ;
et mis en œuvre itérativement ; jusqu'à convergence selon un critère d'arrêt prédéterminé, les éléments suivants :

- un module d'obtention configuré, pour une localisation courante dudit ensemble de capteurs associée à ladite itération, et pour chacun desdits N défauts distincts, obtenir, par simulation, des données propres à être mesurées par ledit ensemble de capteurs positionnés selon ladite localisation,
- un module de résolution configuré pour résoudre et obtenir, à partir desdites données, et pour chacun desdits N défauts distincts, une solution d'un problème bas-niveau de reconstruction par tomographie dudit défaut considéré, ladite solution correspondant à l'image reconstruite de la cartographie de l'épaisseur de ladite structure présentant ledit défaut considéré;
- un premier module de détermination configuré pour déterminer, à partir desdites N images reconstruites associées respectivement à chacun desdits N défauts distincts et à partir des N images de référence de la base de donnée associées respectivement à chacun desdits N défauts distincts, un critère associé à un problème haut-niveau d'optimisation de la qualité de reconstruction desdits N défauts distincts, ledit critère correspondant à la somme des qualités de la reconstruction sur l'ensemble desdits N défauts distincts,
- un deuxième module de détermination configuré pour déterminer le gradient dudit critère,
- un module de déplacement configuré pour déplacer chaque capteur proportionnellement à la valeur dudit gradient dudit critère associée à chaque capteur et pour obtenir la localisation de chaque capteur à utiliser lors de l'itération suivante.

L'invention a également pour objet un système de détection d'anomalie(s) dans une structure par tomographie à ondes guidées au moyen d'un ensemble de capteurs, les capteurs dudit ensemble étant disposés sur ladite structure, ledit système étant comprenant :

- ledit ensemble de capteurs ;
- un dispositif électronique d'optimisation du placement dudit ensemble de capteurs tel que décrit précédemment ;
- un module de détection d'anomalies par tomographie à ondes guidées configuré pour utiliser les mesures dudit ensemble de capteurs afin de fournir une tomographie de ladite structure.

Suivant d'autres aspects avantageux de l'invention, le système de détection d'anomalie(s) dans une structure par tomographie à ondes guidées au moyen d'un ensemble de capteurs comprend une ou plusieurs des caractéristiques suivantes, prises isolément ou suivant toutes les combinaisons techniquement possibles :

- les capteurs dudit ensemble sont selon l'un des types appartenant au groupe comprenant au moins :

  - les capteurs piézoélectriques ;
  - les capteurs EMAT ;
  - les capteurs FBG ;
  - les capteurs PVDF ;

- le système est propre à fonctionner en :

  - mode actif selon lequel les capteurs génèrent et mesurent les ondes guidées, ou en
  - mode passif selon lequel les capteurs sont configurés pour mesurer les ondes guidées présentes dans la structure naturellement durant son exploitation, les signaux mesurés par lesdits capteurs en mode passif étant propres à être utilisés pour déterminer une fonction représentative de la réponse impulsionnelle de ladite structure ;

- le module de détection d'anomalies par tomographie à ondes guidées configuré pour utiliser les mesures dudit ensemble de capteurs afin de fournir une tomographie de ladite structure comprend un solveur permettant la résolution d'un problème de minimisation sous la forme :

$$\hat{O} = \underset{O}{\mathrm{argmin}}\, \frac{1}{2}\|\varphi - \Phi(O)\|_2^2 + R(O)$$

où $O$ représente la fonction objet caractérisant un défaut de ladite structure, $R$ est un terme de pénalité permettant la régularisation de la solution, $\varphi$ représente les champs mesurés via lesdits capteurs dudit ensemble, $\Phi$ représente un modèle suivant une équation de Lippmann Schwinger :

$$\Phi(x_j, x_i) - \Phi^0(x_j, x_i) = \iint_\Omega G_0(x_j, x) O(x) \Phi(x, x_i) d^2x$$

$G_0$ étant la fonction de Green, solution de l'équation de Helmholtz associée à l'état sain de ladite structure

Ces caractéristiques et avantages de l'invention apparaîtront plus clairement à la lecture de la description qui va suivre, donnée uniquement à titre d'exemple non limitatif, et faite en référence aux dessins annexés, sur lesquels :

- la figure 1 est un schéma illustrant un dispositif d'optimisation du placement d'un ensemble de capteurs de détection de défaut(s) dans une structure par tomographie à ondes guidées selon la présente invention;
- la figure 2 est un organigramme d'un procédé d'optimisation bi-niveau de la localisation d'un ensemble de capteurs de détection de défaut(s) dans une structure par tomographie à ondes élastiques guidées selon la présente invention ;
- la figure 3 est un schéma illustrant de manière générale le fonctionnement de la tomographie par onde guidée ;
- la figure 4 illustre le déplacement de capteurs obtenu après optimisation bi-niveau à partir d'une configuration initiale ;
- la figure 5 compare sur un exemple donné les résultats obtenus selon la présente invention à ceux obtenus selon l'état de la technique.

Dans la suite de la description, l'expression « sensiblement égal à » s'entend comme une relation d'égalité à plus ou moins 10%, c'est-à-dire avec une variation d'au plus 10%, de préférence encore comme une relation d'égalité à plus ou moins 5%, c'est-à-dire avec une variation d'au plus 5%.

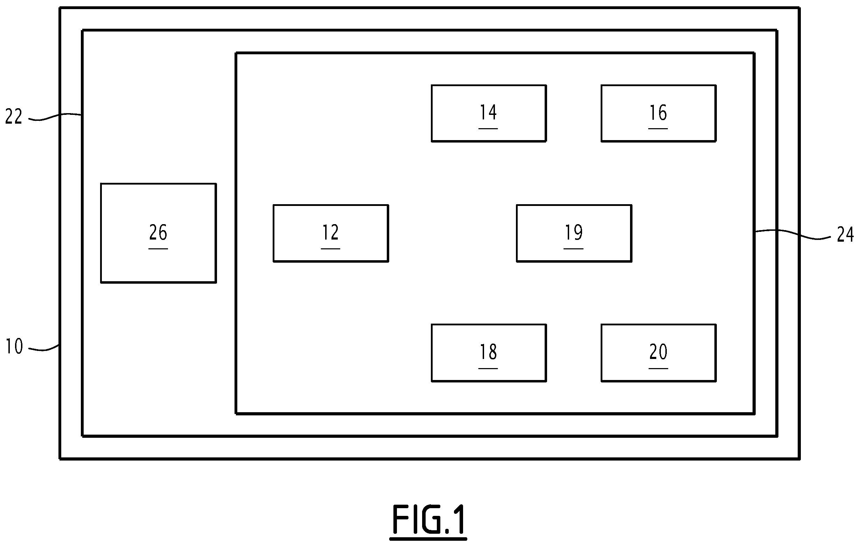

La figure 1 est une représentation d'un dispositif électronique 10 d'optimisation bi-niveau de la localisation d'un ensemble de capteurs de détection de défaut(s) dans une structure par tomographie à ondes élastiques guidées, les capteurs (non représentés) dudit ensemble étant disposés sur ladite structure (non représentée sur la figure 1).

Il est à noter que lesdits capteurs sont propres à fonctionner en « mode actif » selon lequel les capteurs génèrent et mesurent les ondes guidées (e.g. ultrasonores), ou en « mode passif » selon lequel les capteurs se contentent de mesurer les ondes guidées (e.g. ultrasonores) présentes dans la structure naturellement durant son exploitation.

Les méthodes passives (corrélation de bruit, filtre inverse passif ou encore corrélation de coda de corrélation) permettent de reconstruire les mêmes signaux (ou pratiquement les mêmes selon le respect ou non de certaines hypothèses) que ceux que l'on mesure en mode actif mais de manière totalement passive.

Plus précisément, il n'y a pas d'émission d'ondes par les capteurs en mode passif. Les capteurs ne font que de mesurer le bruit ambiant, sur un temps suffisamment long, naturellement présent dans la structure inspectée durant son exploitation. Le bruit ambiant est une somme d'ondes guidées de différentes intensités et se propageant dans différentes directions. Ce bruit ambiant est alors traité par une méthode dite passive (i.e. un traitement passif), dont des exemples sont décrits dans les demandes de brevet FR 3 073 289, FR 3 084 748, FR 3 105 554, permettant de déterminer une fonction représentative de la réponse impulsionnelle de la structure (correspondant sensiblement au signal mesuré en mode actif). De telles reconstructions de signaux sont propres à être utilisées en tant que données d'entrée de tomographie de la même manière qu'en mode actif.

De plus, par capteurs, on entend par la suite des capteurs selon l'un des types de capteurs ou combinaisons de capteurs suivants : des capteurs piézoélectriques, des réseaux de Bragg sur fibre optique, ou FBG (de l'anglais *Fiber Bragg Gratings*), EMAT (de l'anglais *Electro magneto acoustic transducer*), PVDF (Polyvinylidene fluoride), etc.

Selon la présente invention, le dispositif 10 comprend une unité d'optimisation bi-niveau (non représentée en tant que telle) comprenant tout d'abord un module d'initialisation 12 configuré pour initialiser une configuration de détection de référence, et configuré pour générer une base de donnée comprenant respectivement un nombre prédéterminé N d'images de référence distinctes de cartographies de l'épaisseur de ladite structure présentant respectivement N défauts distincts d'une image à l'autre.

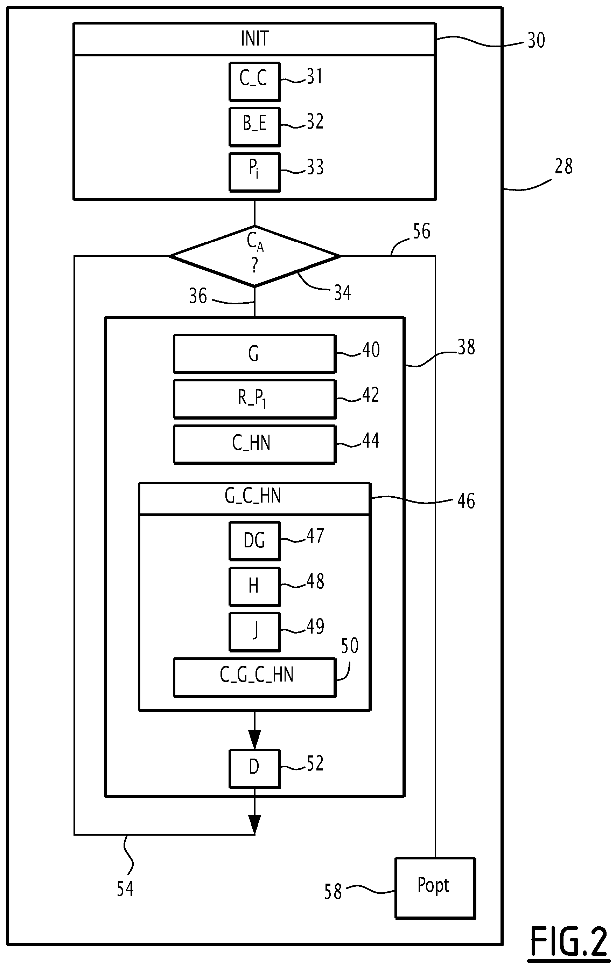

Selon une variante optionnelle complémentaire, décrite plus en détail par la suite en relation avec la figure 2 illustrant le procédé mis en œuvre par ledit dispositif électronique 10, le module d'initialisation 12 est plus précisément configuré pour définir des éléments appartenant au groupe comprenant au moins les éléments suivants :

- la taille de zone de la structure à inspecter au moyen de ladite détection ;
- la longueur d'onde d'intérêt $\lambda_0$ ;
- le nombre de capteurs théoriquement nécessaires à ladite détection ;
- le nombre de capteurs utilisés en pratique ;
- le positionnement initial desdits capteurs.

Par ailleurs, selon la présente invention, l'unité d'optimisation bi-niveau du dispositif électronique 10 comprend également un ensemble de modules propres à être mis en œuvre successivement au cours d'une même itération; chaque itération étant répétée jusqu'à convergence selon un critère d'arrêt prédéterminé.

Un tel ensemble de modules comprend tout d'abord un module d'obtention 14 configuré pour obtenir, notamment par simulation, pour une localisation courante dudit ensemble de capteurs associée à ladite itération, et pour chacun desdits N défauts distincts, des données propres à être mesurées par ledit ensemble de capteurs positionnés selon ladite localisation.

De plus, selon la présente invention, cet ensemble de modules comprend en outre un module de résolution 16 configuré pour résoudre et obtenir, à partir desdites données fournies par le module d'obtention 14, et pour chacun desdits N défauts distincts, une solution d'un problème bas-niveau de reconstruction par tomographie dudit défaut considéré, ladite solution correspondant à l'image reconstruite de la cartographie de l'épaisseur de ladite structure présentant ledit défaut considéré.

En outre, selon la présente invention, l'unité d'optimisation bi-niveau du dispositif électronique 10 comprend également un premier module de détermination 18 configuré pour déterminer, à partir desdites N images reconstruites associées respectivement à chacun desdits N défauts distincts et à partir des N images de référence de la base de donnée associées respectivement à chacun desdits N défauts distincts, un critère associé à un problème haut-niveau d'optimisation de la qualité de reconstruction desdits N défauts distincts.

Par ailleurs, selon la présente invention, l'unité d'optimisation bi-niveau du dispositif électronique 10 comprend également un deuxième module de détermination 19 configuré pour déterminer le gradient dudit critère.

Enfin, selon la présente invention, l'unité d'optimisation bi-niveau du dispositif électronique 10 comprend également un module de déplacement 20 configuré pour déplacer chaque capteur proportionnellement à la valeur dudit gradient dudit critère associée à chaque capteur et pour obtenir la localisation de chaque capteur à utiliser lors de l'itération suivante.

Plus précisément, comme détaillé par la suite, le gradient dudit critère dépend des paramètres p l'ensemble des positions des capteurs, et le gradient donne une direction dans laquelle déplacer proportionnellement les capteurs, avec un déplacement proportionnel borné par des bornes prédéterminées permettant d'éviter que le déplacement ne soit ni trop grand ni trop petit.

En minimisant ce gradient, on arrive donc à optimiser les positions des capteurs, ce qui est l'objectif de la présente invention.

Autrement dit, on cherche à minimiser la valeur du gradient, dont le jeu de paramètres p correspond à l'ensemble des positions des capteurs, de manière itérative en réalisant une descente de gradient et en vérifiant à chaque itération que la valeur du gradient diminue, afin que l'algorithme d'optimisation converge. C'est la descente de gradient qui permet d'obtenir les nouvelles positions des capteurs. A chaque nouvelle valeur du gradient correspond donc un nouveau jeu de positions de capteurs p.

Dans l'exemple de la figure 1, le dispositif électronique 10 d'optimisation bi-niveau de la localisation d'un ensemble de capteurs de détection de défaut(s) dans une structure par tomographie à ondes élastiques guidées comprend une unité de traitement d'informations 22 formée par exemple d'une mémoire 24 et d'un processeur 26 associé à la mémoire 24.

Dans l'exemple de la figure 1, le module d'initialisation 12, le module d'obtention 14, le module de résolution 16, le premier module de détermination 18, le deuxième module de détermination 19, et le module de déplacement 20 sont réalisés chacun sous forme d'un logiciel, ou d'une brique logicielle, exécutable par le processeur 26. La mémoire 24 du dispositif électronique 10 d'optimisation bi-niveau de la localisation d'un ensemble de capteurs de détection de défaut(s) dans une structure par tomographie à ondes élastiques guidées est alors apte à stocker, pour mettre en œuvre ladite optimisation bi-niveau, un logiciel d'initialisation, et de manière itérative, un logiciel d'obtention, un logiciel de résolution, un premier logiciel de détermination, un deuxième logiciel de détermination, et un logiciel de déplacement. Le processeur 26 est alors apte à exécuter chacun des logiciels parmi le logiciel d'initialisation, le logiciel d'obtention, le logiciel de résolution, le premier logiciel de détermination, le deuxième logiciel de détermination, et le logiciel de déplacement.

En variante non représentée, le module d'initialisation 12, le module d'obtention 14, le module de résolution 16, le premier module de détermination 18, le deuxième module de détermination 19, et le module de déplacement 20 sont réalisés chacun sous forme d'un composant logique programmable, tel qu'un FPGA (de l'anglais *Field Programmable Gate Array*), ou un processeur graphique GPU (de l'anglais *Graphics Processing Unit*), ou encore sous forme d'un circuit intégré, tel qu'un ASIC (de l'anglais *Application Specific Integrated Circuit*).

Lorsque le dispositif électronique 10 d'optimisation bi-niveau de la localisation d'un ensemble de capteurs de détection de défaut(s) dans une structure par tomographie à ondes élastiques guidées est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique. Sur le support lisible est alors mémorisé un programme d'ordinateur comprenant des instructions logicielles.

Le fonctionnement du dispositif électronique 10 d'optimisation bi-niveau de la localisation d'un ensemble de capteurs de détection de défaut(s) dans une structure par tomographie à ondes élastiques guidées va maintenant être décrit en référence à la figure 2 qui illustre schématiquement un exemple de mise en œuvre, selon la présente invention, d'un procédé 28 d'optimisation bi-niveau de la localisation d'un ensemble de capteurs de détection de défaut(s) dans une structure par tomographie à ondes élastiques guidées, les capteurs dudit ensemble étant disposés sur ladite structure (non représentée).

Plus précisément, selon la présente invention, le procédé 28 correspond à une optimisation bi-niveau de la localisation de l'ensemble de capteurs de détection comprenant tout d'abord une étape 30 d'initialisation d'une configuration de détection de référence, et de génération d'une base de donnée comprenant respectivement un nombre prédéterminé N d'images de référence distinctes de cartographies de l'épaisseur de ladite structure présentant respectivement N défauts distincts d'une image à l'autre.

En complément optionnel, ladite initialisation 30 de la configuration de détection de référence comprend la définition des éléments appartenant au groupe comprenant au moins les éléments suivants :

- la taille de zone de la structure à inspecter au moyen de ladite détection ;
- la longueur d'onde d'intérêt ;
- le nombre de capteurs théoriquement nécessaires à ladite détection ;
- le nombre de capteurs utilisés en pratique ;
- le positionnement initial desdits capteurs.

Pour ce faire, selon l'exemple de la figure 2, la phase d'initialisation 30 comprend une première sous-étape 31 de choix C_C de la configuration de référence en tant que telle dans laquelle la taille de zone à inspecter, la longueur d'onde d'intérêt $\lambda_0$, le nombre de capteurs nécessaire en théorie pour inspecter ladite zone, et le nombre de capteurs choisi par l'utilisateurs sont définis, notamment au moyen d'une interface utilisateur non représentée sur la figure 1.

Selon ce complément optionnel, la phase d'initialisation 30 comprend en outre une sous-étape 32 de définition et génération de la base de données, dite d'entrainement, B_E. Lors de la génération de la base de données B_E, la cartographie de l'épaisseur de la structure à inspecter est rigoureusement obtenue pour chacun des N défauts, par simulation précise de chaque défaut. Selon un exemple, N est notamment sensiblement égal à cinquante défauts distincts (en taille, forme, etc.) simulés précisément pour obtenir pour chacun des N défauts, la cartographie de l'épaisseur de la structure à inspecter avec le défaut considéré.

Selon ce complément optionnel, la phase d'initialisation 30 comprend en outre une sous-étape 33 de positionnement initial desdits capteurs, ledit positionnement initial $P_i$ étant le point de départ pour la mise en œuvre itérative de l'optimisation bi-niveau itérative en tant que telle et tel que décrit par la suite.

En complément optionnel, ledit positionnement initial $P_i$ desdits capteurs correspond à une disposition circulaire régulière desdits capteurs.

En complément optionnel, ladite sous-étape 33 de la phase d'initialisation 30 comprend en outre l'obtention d'une asymétrie dudit positionnement initial par application d'un déplacement de valeur prédéterminée, par exemple un dixième de la longueur d'onde d'intérêt $\lambda_0$, selon une direction aléatoire de chacun desdits capteurs.

En complément optionnel, ladite sous-étape 32 de définition et génération de la base de données, dite d'entrainement, B_E est répétable de sorte à rendre ladite base de donnée B_E reconfigurable en fonction d'une information sur un type de défaut a priori à détecter.

Puis, le procédé 28 d'optimisation bi-niveau de la localisation d'un ensemble de capteurs de détection de défaut(s) dans une structure par tomographie à ondes élastiques guidées comprend une boucle itérative réitérée jusqu'à convergence selon un critère d'arrêt prédéterminé $C_A$ (i.e. critère de convergence) testé lors de l'étape 34.

Tant que le critère d'arrêt (i.e. critère de convergence) prédéterminé $C_A$ n'est pas atteint tel qu'illustré par la flèche 36, la boucle itérative 38 et mise en œuvre.

La boucle itérative 38 comprend les cinq étapes successives décrites ci-après, à savoir tout d'abord une étape 40 d'obtention G de données propres à être mesurées par ledit ensemble de capteurs positionnés selon une localisation courante dudit ensemble de capteurs associée à ladite itération courante, et pour chacun desdits N défauts distincts utilisés au préalable lors de la phase d'initialisation 30 pour générer la base d'entrainement B_E.

Ensuite, la boucle itérative 38 comprend, à partir desdites données, et pour chacun desdits N défauts distincts, une étape 42 de résolution R_P$_1$ et d'obtention d'une solution d'un problème bas-niveau de reconstruction par tomographie dudit défaut considéré, ladite solution correspondant à l'image reconstruite de la cartographie de l'épaisseur de ladite structure présentant ledit défaut considéré.

Puis, la boucle itérative 38 comprend, à partir desdites N images reconstruites associées respectivement à chacun desdits N défauts distincts et à partir des N images de référence de la base de donnée associées respectivement à chacun desdits N défauts distincts, une étape 44 de détermination d'un critère C_HN associé à un problème haut-niveau d'optimisation de la qualité de reconstruction desdits N défauts distincts.

Ensuite, la boucle itérative 38 comprend une étape 46 de détermination du gradient G_C_HN dudit critère C_HN prédéterminé associé au problème haut-niveau.

Plus précisément, en complément optionnel tel qu'illustré par la figure 2, la détermination 46 du gradient G_C_HN dudit critère C_HN comprend :
pour chacun desdits N défauts distincts :

- une sous-étape 47 de détermination, d'un double gradient DG dudit problème bas-niveau, par différenciation du gradient dudit problème bas-niveau en fonction de ses paramètres ;
- une sous-étape 48 de détermination d'une matrice hessienne H associée en fonction des données respectivement issues de ladite base de donnée, ladite matrice hessienne H étant inversible,
- à partir de ladite matrice hessienne, une sous étape 49 de détermination d'une matrice jacobienne J selon une relation d'obtention prédéterminée ; et
- à partir de l'ensemble des matrices jacobiennes respectivement associées à chacun desdits N défauts distincts, une sous-étape 50 de détermination CG_C_HN du gradient dudit critère.

Enfin, la boucle itérative 38 comprend une étape 52 de déplacement de chaque capteur proportionnellement à la valeur dudit gradient (appelé par la suite $\nabla E_{high}(p)$) dudit critère (ou score et appelé par la suite $E_{high}(p)$) associée à chaque capteur et d'obtention de la localisation de chaque capteur à utiliser lors de l'itération suivante illustrée par la flèche 54.

Plus précisément, le déplacement est exprimé de sorte qu'après déplacement, pour chaque capteur utilisé, la nouvelle position d'un capteur $p_{nv}$ est égale à sa position précédente $p_p$ moins la valeur correspondant au produit d'un pas fois la valeur dudit gradient associé à l'itération courante, le pas étant constant ou variable, soit : $p_{nv} = p_p - pas*gradient$.

Un pas constant (i.e. de valeur constante) est par exemple initialisé lors de l'initialisation 30 précitée de la position des capteurs, et correspond par exemple à un cinquième de la longueur d'onde d'intérêt $\lambda_0$, la norme infinie du gradient étant en réalité le déplacement maximal des capteurs sur une structure porteuse, à savoir une plaque, commandé par le gradient. Autrement dit, on normalise en utilisant la norme infinie du gradient c'est-à-dire en divisant par le maximum du gradient.

Un pas variable est utilisé à titre d'alternative au pas constant, en vérifiant si le nouveau score $E_{high}(p)$ (i.e. la nouvelle valeur dudit critère obtenu lors de l'itération courante) ou son gradient $\nabla E_{high}(p)$ diminue par rapport à l'itération précédente.

Dans l'affirmative, le déplacement de la position précédente $p_p$ à la nouvelle position $p_{nv}$ est validé et la valeur du pas de l'itération courante croit pour l'itération suivante en étant multiplié par exemple par un facteur de 1,4 (ce qui correspond environ à la racine carrée de deux), ou par d'autres valeurs prédéterminées afin d'accélérer la convergence.

Dans la négative, le pas de l'itération courante est diminué afin de « rebrousser chemin » en étant par exemple divisé par deux, puis re-testé.

Lorsque l'on vérifie si le score $E_{high}(p)$ diminue (ou son gradient $\nabla E_{high}(p)$), un nombre maximal de boucles de test (i.e. de divisions du pas) à ne pas dépasser est fixé. En effet, si $E_{high}(p)$ ne diminue plus alors que le pas a été de nombreuses fois divisé c'est qu'un minimum est atteint.

Par ailleurs, une telle étape de déplacement 52 comprend optionnellement la vérification du fait que le déplacement mis en œuvre est suffisamment grand par rapport à un seuil de déplacement prédéterminé. Par exemple, il faut qu'au moins un capteur soit déplacé d'une distance supérieure au seuil de déplacement prédéterminé correspondant, par exemple, à un vingtième de la longueur d'onde d'intérêt $\lambda_0$.

Comme représenté par la flèche 54, il s'agit donc d'une méthode itérative où l'on vient répéter (i.e. réitérer) successivement les étapes 40, 42, 44, 46, 52 jusqu'à convergence afin d'optimiser le placement des capteurs. Une fois le critère de convergence atteint tel que testé à l'étape 34, on obtient, selon la flèche 56, en résultat 58 un positionnement P$_{opt}$ jugé « optimal » des capteurs correspondant au minimum local du critère de niveau haut (i.e. haut-niveau) correspondant à l'initialisation 30 précitée de la position des capteurs notamment, (deux configurations d'initialisation distinctes étant propres à mener respectivement à deux minimum locaux distincts (i.e. le procédé selon la présente invention n'est pas déterministe car en fonction de l'initialisation le minimum local trouvé par le procédé peut être différent).

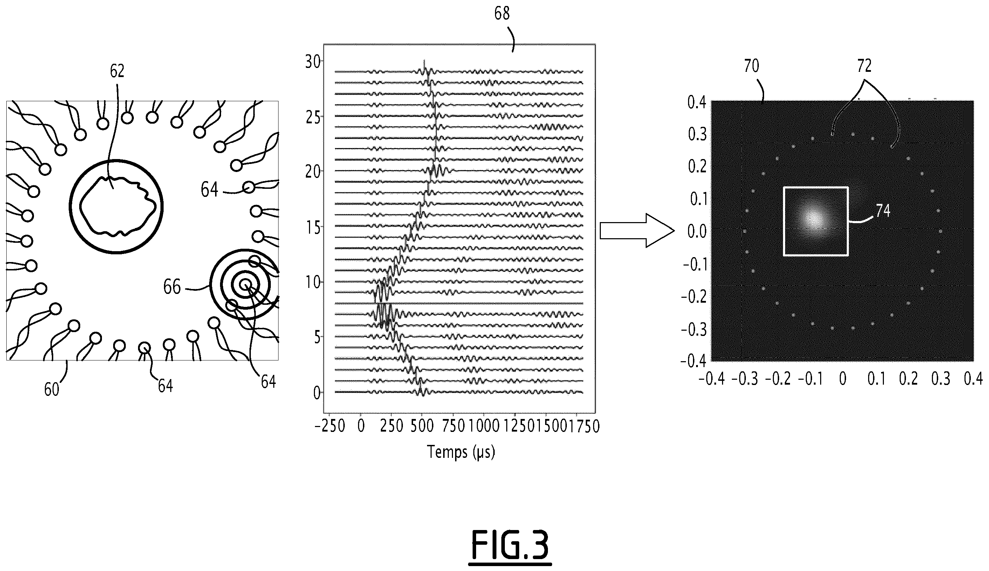

Par la suite, on décrit plus en détail les étapes du procédé 28 en relation avec les figures 3 à 5.

En particulier, la figure 3 est un schéma illustrant de manière générale le fonctionnement de la tomographie par onde guidée.

Plus précisément, sur la vue schématique 60 « réelle » de la figure 3, une structure porteuse, à savoir une plaque, d'un défaut 62 est représentée instrumentée par un réseau de capteurs 64, par exemple piézoélectriques. Un tel défaut 62 propre à être présent dans la structure, correspond par exemple à une perte d'épaisseur par corrosion/érosion, ou à un délaminage dans un composite ou encore à une fissure dans un matériau métallique.

Sur la figure 3, le symbole 66 représente la génération/mesure, par les capteurs 64, d'ondes ultrasonores. La vue 68 illustre ensuite, après extraction et calibration des champs $\varphi$ des signaux temporels acquis, le traitement des signaux obtenus, et en particulier la représentation du temps de vol théorique associé au signal acquis par chaque capteur 64 (i.e. chaque capteur 64 met en œuvre une acquisition de données).

A partir de ces champs $\varphi$ acquis par les capteurs 64, la reconstruction d'une cartographie de vitesses de la zone à inspecter (i.e. la tomographie en elle-même) est mise en œuvre et basée sur un modèle $\Phi$ suivant l'équation de Lippmann Schwinger :

$$\Phi\left(x_j, x_i\right) - \Phi^0\left(x_j, x_i\right) = \iint_{\Omega} G_0\left(x_j, x\right) O(x) \Phi(x, x_i) d^2 x \qquad (1)$$

$G_0$ étant la fonction de Green, solution de l'équation de Helmholtz associée à l'état sain de la structure.

Une telle reconstruction est par exemple réalisée en utilisant un solveur, par exemple non-linéaire (ou à titre d'alternative utilisant une succession d'itérations linéaires), permettant la résolution d'un problème de minimisation sous la forme :

$$\hat{O} = \underset{O}{\mathrm{argmin}} \frac{1}{2} \|\varphi - \Phi(O)\|_2^2 + R(O). \qquad (2)$$

où $\varphi$ représente, comme indiqué précédemment les champs mesurés (i.e. données $\varphi$) via lesdits capteurs 64, $\Phi$ représente le modèle précité suivant l'équation de Lippmann Schwinger, $O$ la fonction objet caractérisant le défaut 62, et $R$ est un terme de pénalité permettant la régularisation de la solution. Il s'agit donc de trouver la fonction objet $\hat{O}$ qui réalise le meilleur compromis entre un terme de fidélité aux mesures $\varphi$ selon le modèle $\Phi$ et une structure régulière imposée par $R$.

Notons que si la régularisation $R$ est proportionnelle à la norme L1, une telle reconstruction est dans une configuration type « Lasso » tel que décrit par Q. Bertrand et al. dans l'article intitulé « Implicit differentiation of Lasso-type models for hyperparameter optimization » de 2020.

Une telle reconstruction par tomographie est propre à être couplée à une acquisition comprimée (CS de l'anglais *Compressed Sensing*), permettant de reconstruire des signaux échantillonnés sous la fréquence de Nyquist.

Selon l'application de la présente invention, le sous échantillonnage est spatial (i.e. échantillonné dans l'espace, et non temporel), et pour fonctionner, l'acquisition comprimée CS requiert la conformité à deux principes clés, à savoir d'une part la parcimonie des données (i.e. l'inconnu présente un nombre faible de coefficients non nuls) ou la compressibilité des données (c'est-à-dire que l'inconnu peut être décrit avec peu de coefficients dans une base mathématique bien choisie), et d'autre part l'incohérence du procédé de mesure, par exemple obtenue au travers d'un échantillonnage aléatoire, la présente invention cherchant à maximiser l'incohérence (i.e. minimiser la cohérence) du procédé de mesure en plaçant les capteurs de manière astucieuse, par optimisation bi-niveau tel que décrit en détail ci-après, le problème de reconstruction devenant le problème de bas niveau (i.e. problème bas-niveau).

Une fois la reconstruction de la cartographie de vitesse effectuée, cette cartographie de vitesse est convertie en cartographie d'épaisseur, tel qu'illustrée par la vue 70 grâce aux propriétés dispersives des ondes guidées. En particulier, sur la vue 70, l'espace des nombre d'onde (i.e. le cercle d'Ewald) de placement des capteurs 72 est représenté, de même que la zone 74 de la cartographie d'épaisseur correspondant au défaut 62 de la vue réelle 60.

Il est à noter que la présente invention vise avant tout à optimiser le placement des capteurs 64, et s'applique à différentes variantes de reconstruction par tomographie à onde guidées, notamment au moyens de différentes fonctions de régularisation R(.), préférentiellement d'un algorithme de reconstruction par tomographie par diffraction itérative tel que décrit par F. Simonetti et al. dans l'article intitulé « From beamforming to diffraction tomography » de 2008, ou par tomographie en temps de vol tel que précédemment cité.

La vue 70 correspond notamment à la reconstruction par tomographie classique utilisant un réseau régulier circulaire de trente capteurs pour notamment respecter le critère de Shannon Nyquist ce qui permet théoriquement d'obtenir une reconstruction tomographique classique parfaite mais au prix de nécessiter en général un grand nombre de capteurs. En effet, en tomographie par onde guidées classique, pour atteindre une qualité de reconstruction des défauts maximale, il faut placer un capteur toutes les demies longueurs d'ondes.

Ci-après l'optimisation bi-niveau selon la présente invention est décrite plus en détail.

Il est à noter que Q. Bertrand et al. dans l'article intitulé « Implicit differentiation of Lasso-type models for hyperparameter optimization » de 2020 décrit de manière générale une optimisation bi-niveau appliquée au cas général d'estimation mathématique du meilleur paramètre de régularisation associé à un problème de type Lasso, et non appliquée, tel que proposé selon la présente invention et décrit par la suite, à la tomographie par onde guidées dans le domaine de contrôle de santé de structure ou SHM (de l'anglais *Structural Health Monitoring*).

Le contexte général et mathématique de ce document pose un problème de type Lasso dans lequel un vecteur $x$ de norme L1 minimale, relié à un vecteur de mesure $y$ par un modèle $A$ est recherché, et à jeu de paramètres $\lambda$ donné, définit le critère suivant :

$$E_{low}(x, \lambda) = \frac{1}{2} \|Ax - y\|_2^2 + \lambda \|x\|_1 \quad (3)$$

le vecteur xde norme L1 minimale retenu correspondant alors à l'approximation exprimée au moyen de l'accent $^\wedge : \hat{x}(\lambda) = \underset{x}{\operatorname{argmin}}\, E_{low}(x, \lambda)$ . Ce premier problème de reconstruction (associé à l'indice *low*) est désigné par la suite comme le problème de bas-niveau. Puis Q. Bertrand et al. propose d'évaluer les performances de reconstruction de l'algorithme sur une base d'entrainement de $N$ images connues $(x_i)_{i=1,...N}$ et un jeu de données associés $(y_i)_{i=1,...N}$ pour l'indice *i* variant de 1 à *N*.

Toujours selon cet article, le meilleur paramètre de régularisation $\hat{\lambda}$ est solution d'un problème du type suivant :

$$\hat{\lambda} = \underset{\lambda}{\operatorname{argmin}} \sum_{i=1}^{N} L(x_i, \hat{x_i}(\lambda)) + P(\lambda) \quad (4)$$

où *L* définit une distance entre les images connues $x_i$ et les images estimées $\hat{x}_i(\lambda)$ et *P* est une pénalité permettant de régulariser optionnellement $\lambda$. Ce problème de détermination du meilleur paramètre de régularisation $\hat{\lambda}$ est désigné par la suite comme problème de haut-niveau.

La résolution de deux problèmes d'optimisation imbriqués l'un dans l'autre définit ce que l'on appelle une optimisation bi-niveau.

Selon cet article de Q. Bertrand et al., la difficulté technique d'une telle optimisation bi-niveau est associée à la mise en œuvre d'une descente de gradient du problème de haut-niveau. La descente du gradient est un procédé mathématique d'optimisation convexe appliquée spécifiquement et avantageusement selon la présente invention pour optimiser le problème de haut-niveau défini dans le contexte de l'optimisation bi niveau.

En effet, une telle application un problème de tomographie par ondes guidées sous la problématique du placement libre d'un nombre fixé de capteurs n'a pas été mise en œuvre auparavant selon l'état de la technique.

Plus précisément, le calcul du gradient à chaque itération, consiste selon la présente invention à dériver le modèle de tomographie (i.e. le modèle de mesure) utilisé en fonction des positions des capteurs.

Comme détaillé par la suite, le calcul du gradient est effectué après avoir simplifié le modèle de tomographie (i.e. le modèle de mesure), notamment en utilisant une simplification de la tomographie par diffraction sous l'approximation de Born. Il s'agit alors de dériver partiellement les cartographies de fonctions de Green libre dans la structure en fonction de la position de la source.

En effet, le calcul du gradient de *L* en fonction de $\hat{\lambda}$, ce gradient étant appelé $\nabla_\lambda L$ nécessite de savoir l'expression de la matrice jacobienne $J = \left[\frac{\hat{x_i}^k}{\partial \lambda_l}\right]_{k,l}$ comprenant de manières générique les dérivées partielles de chacune des composantes (k) de l'image estimée en fonction de chaque paramètre (I), et propose pour la surmonter le postulat que la solution du problème bas-niveau annule le gradient du problème bas-niveau :

$$\nabla_x E_{low}(\hat{x}(\lambda), \lambda) = 0 \quad (5),$$

ce qui permet ensuite de différencier cette relation en fonction des paramètres, pour obtenir :

$$\nabla_{x,\lambda} E_{low}(\hat{x}(\lambda), \lambda) = \nabla_{x,x}^2 E_{low}(\hat{x}(\lambda), \lambda) J^T + \nabla_{x,\lambda}^2 E_{low}(\hat{x}(\lambda), \lambda) = 0 \quad (6),$$

pour enfin obtenir l'expression suivante de la jacobienne, sous réserve que la matrice hessienne soit inversible :

$$J^T = (\nabla_{x,x}^2 E_{low}(\hat{x}(\lambda), \lambda))^{-1} \nabla_{x,\lambda}^2 E_{low}(\hat{x}(\lambda), \lambda) \quad (7).$$

Autrement dit, l'article de Q. Bertrand et al. propose une méthode générale et mathématique de différentiation applicable pour l'optimisation de paramètres d'un algorithme de reconstruction dans le cadre d'une optimisation bi-niveau.

La présente invention propose d'adapter, judicieusement et spécifiquement, le principe général décrit dans l'article de Q. Bertrand et al. à la tomographie par ondes guidées dans le domaine de contrôle de santé de structure ou SHM (de l'anglais *Structural Health Monitoring*), en considérant astucieusement (et de manière non évidente) la position $p$ des capteurs comme paramètres à optimiser (à la place du paramètre $\lambda$ de l'article de Q. Bertrand et al).

L'approche d'optimisation bi-niveau proposée selon la présente invention est donc appliquée spécifiquement à la tomographie par onde guidées, et est également composée de deux problèmes d'optimisation imbriqués l'un dans l'autre, ces deux problèmes étant distincts.

Plus précisément, le premier niveau, dit bas-niveau (*low*), est, spécifiquement selon la présente invention, la reconstruction tomographique telle que décrite dans l'équation suivante, correspondant à une réécriture de l'équation (2) précédemment citée :

$$\hat{s}(p) = \underset{s}{\arg\min}\, E_{low}(s, p) = \underset{s}{\arg\min}\, L(s, p) + R(s, p) \quad (8)$$

où s est la représentation dite parcimonieuse de la fonction objet $O$, $L$ représente l'écart aux données à reconstruire, $p$ représente le jeu de paramètres à savoir le jeu des positions des capteurs, $L(s, p) = \frac{1}{2}\|\varphi(p) - \Phi(s, p)\|_2^2$ désigne le problème sous-déterminé à inverser avec les mesures $\varphi$ obtenues lors de l'étape 40 précédemment mentionnée du procédé 38 selon la présente invention, $\Phi$ le modèle suivant l'équation de Lippmann Schwinger (1) précitée, et R est la pénalité de régularisation.

Autrement dit, lors de l'étape 40, à placement $p$ de capteurs donné, les données $\varphi_i(p)$ sont générées de manière numérique pour chaque défaut $i$ de la base B_E grâce au modèle connu $\Phi(.,p)$.

Puis, lors de l'étape 42, chaque problème bas-niveau pour obtenir les solutions $\hat{s}_i(p)$, suivant l'équation (8) est résolu.

Le problème du second niveau, ou problème haut-niveau (*high*), est propre à être formulé de la manière suivante :

$$\hat{p} = \underset{p}{\arg\min}\, E_{high}(p) = \underset{p}{\arg\min}\, \sum_{n=1}^{N} \varepsilon_n(p)) \quad (9),$$

avec $\varepsilon_n(p) = E\left(s_n, \widehat{s_n}(p)\right)$ chaque erreur d'estimation, et correspond à l'optimisation de la qualité de la reconstruction $E$ sur l'ensemble de N défauts tests ayant servi au préalable à la génération de la base de données d'entrainement B_E, $E_{high}(p) = \sum_{n=1}^{N} \varepsilon_n(p)$ correspondant à ce que l'on appelle selon la présente invention le critère (également appelé score) de haut-niveau, avec $\varepsilon_n(p) = E\left(s_n, \widehat{s_n}(p)\right)$ chaque erreur d'estimation.

Autrement dit, lors de l'étape 44, les performances de reconstruction sont évaluées en évaluant ledit critère de haut niveau $\sum_{n=1}^{N} \varepsilon_n(p)$.

Lors de l'étape 46, la sous-étape 47 correspond à la détermination du double gradient $\nabla_{s,p}^2 E_{low}(\hat{s}(p), p)$ dudit problème bas-niveau *(low)*, par différenciation du gradient dudit problème bas-niveau en fonction de ses paramètres, autrement dit, la différenciation des mesures $\varphi_i(p)$ et du modèle $\Phi(.,p)$ en fonction des paramètres à optimiser, le problème bas-niveau étant supposé linéaire, ce qui sous-entend que l'approximation de Born est respectée.

Lors de la sous-étape 48, et toujours pour chacun des desdits N défauts distincts d'indice *i,* la matrice hessienne $H_i = \nabla_{s,s}^2 E_{low}(\hat{s}(p), p)$ est déterminée par calcul à partir des données s associées (i.e. s étant la représentation dite parcimonieuse de la fonction objet $O$), ladite matrice hessienne $H_i$ étant inversible.

Lors de la sous-étape 49, et toujours pour chacun des desdits N défauts distincts d'indice *i,* on détermine par calcul la jacobienne $J_i$ associée en appliquant l'équation (7) précédemment mentionnée.

Lors de la sous-étape 50, le gradient du problème haut-niveau :

$$\nabla E_{high}(p) = \sum_{n=1}^{N} \nabla \varepsilon_n(p)$$

est déterminé par calcul à partir des différentes jacobiennes $J_i$ calculées précédemment lors de la sous-étape 49.

Plus précisément, dans le cas où l'on cherche à calculer une erreur quadratique moyenne

$\varepsilon_n(p) = \frac{1}{2}\|\widehat{s_n}(p) - s_n\|^2$ alors chaque gradient vaut $\nabla\varepsilon_n(p) = J_n^T(\widehat{s_n}(p) - s_n)$ (où chaque $J_n$ est la jacobienne de chaque solution du problème bas-niveau $\widehat{s_n}(p)$ (voir équations 7 et 8 précitées), telle que :

$J_n^T = (\nabla_{s,s}^2 E_{low}(\widehat{s_n}(p), p))^{-1}(\nabla_{s,p}^2 E_{low}(\widehat{s_n}(p), p))$, si bien que l'expression du gradient du critère du problème de haut-niveau est telle que :

$$\nabla E_{high}(p) = \sum_{n=1}^{N}\nabla\varepsilon_n(p) = \sum_{n=1}^{N}\left(\nabla_{s,s}^2 E_{low}(\widehat{s_n}(p), p)\right)^{-1}(\nabla_{s,p}^2 E_{low}(\widehat{s_n}(p), p))(\widehat{s_n}(p) - s_n).$$

En d'autres terme, le procédé 38 selon la présente invention propose d'optimiser les paramètres de la reconstruction sur une base de donnée d'entrainement, ce qui revient à un apprentissage dont la qualité finale dépend de la richesse et de la représentativité de la base d'apprentissage.

Astucieusement, le procédé 38 selon la présente invention revient à considérer l'ensemble des positions des capteurs du jeu de paramètres *p* comme un paramètre du système d'optimisation au même titre que le paramètre $\lambda$ de régularisation dans l'approche générale Lasso de l'article de Q. Bertrand et al.

Le déplacement des capteurs est propre à agir à la fois sur l'opérateur $\Phi$ représentant le modèle direct (à la place du modèle *A* de l'article de Q. Bertrand et al.) et sur les mesures $\varphi$ (à la place des mesures *y* de l'article de Q. Bertrand et al.) ce qui est pris en compte lors du calcul de la matrice jacobienne *J*.

Le déplacement des capteurs issu de l'optimisation du problème de haut-niveau permet ainsi de réduire la cohérence pratique du procédé de mesure ce qui bénéficie au solveur pour résoudre le problème bas-niveau.

Comme indiqué précédemment en relation avec la figure 2, le procédé 38 d'optimisation bi-niveau selon la présente invention est itératif et en complément optionnel le critère d'arrêt prédéterminé $C_A$ correspond à :

- une norme euclidienne du gradient du problème de haut niveau (i.e. problème haut-niveau) inférieure à un seuil $\varepsilon$ prédéterminé, tel que par exemple exprimé selon l'équation suivante $\|\nabla E_{high}(p)\|_2 < \varepsilon$ ; ou
- l'atteinte d'un nombre maximal global d'itérations prédéterminé fixé à l'initialisation.

Selon une variante optionnelle, ledit seuil prédéterminé $\varepsilon$ correspond à une fraction prédéterminée de la longueur d'onde d'intérêt $\lambda_0$ initialisée lors de la phase d'initialisation de ladite configuration de détection de référence. Par exemple, $\varepsilon$ est déterminé pour définir un écart de performances minimum pour le déplacement élémentaire du capteur (c'est-à-dire par exemple de l'ordre du dixième de la longueur d'onde d'intérêt $\lambda_0$).

L'atteinte d'un nombre maximal d'itérations prédéterminé est un critère d'arrêt notamment mis en œuvre par sécurité pour limiter la durée et les ressources de calcul nécessaire à la descente de gradient selon le procédé 38 de la présente invention.

En pratique, les inventeurs ont observé que le déplacement des capteurs à tendance à les rapprocher des défauts, or dans le cadre de la tomographie par ondes guidées, une zone « large » à inspecter dans laquelle les défauts sont susceptibles d'apparaitre est généralement définie, et la présente invention permet de contraindre le déplacement des capteurs à une couronne, dont le rayon moyen est le rayon de la distribution circulaire de référence associée au positionnement initial $P_i$ fixé lors de la phase d'initialisation 30 et son épaisseur est de l'ordre de la longueur d'onde d'intérêt $\lambda_0$.

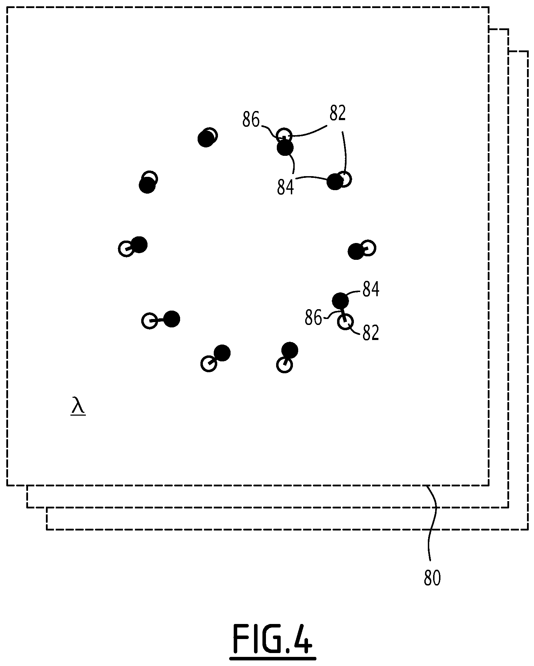

La figure 4 illustre le déplacement dans l'espace des nombres d'onde 80, d'une configuration obtenue après optimisation bi-niveau à partir d'une configuration initiale à quinze capteurs.

Sur la figure 4, la position initiale 82 des capteurs est représentée de même que la nouvelle position 84 associée, les traits 86 représentant la translation (i.e. le déplacement) de chaque capteur, le positionnement optimal 84 ayant été appris en utilisant base de données comprenant quarante images de défauts simples de type corrosion en forme de cuvette. On remarque sur la figure 4, que les déplacements des capteurs tendent à se rapprocher du centre de la zone à inspecter. De plus, le déplacement des capteurs est de l'ordre de grandeur de la longueur d'onde $\lambda_0$.

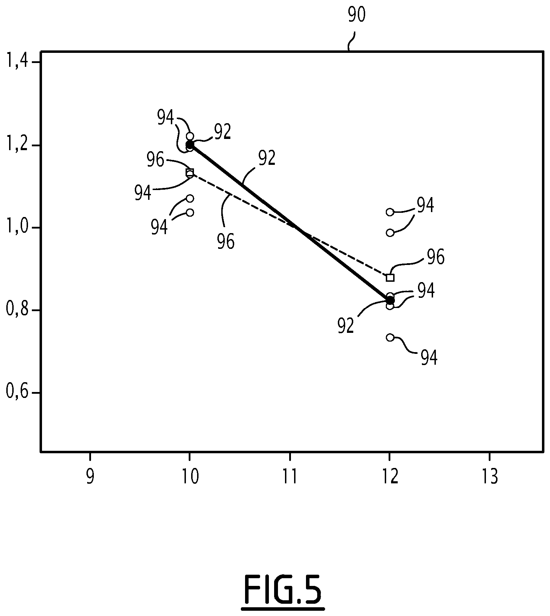

La figure 5 compare sur un exemple donné les résultats obtenus selon la présente invention à ceux obtenus selon l'état de la technique (i.e. positionnements des capteurs réguliers) en quantifiant les erreurs de reconstruction en fonction de la méthode sélectionnée.

Sur la vue 90, l'erreur de reconstruction observée en simulation pour les capteurs positionnés régulièrement est représentée au moyen des points 92 pour des configurations à dix et douze capteurs et sert de point de comparaison. L'erreur de reconstruction d'un défaut simple pour cinq configurations à dix capteurs et cinq configurations à douze capteurs observée en simulation pour les capteurs positionnés au moyen de l'optimisation bi-niveau selon la présente invention est représentée au moyen des points 94 de même que leurs performances moyennes au moyen des points 96.

Tout d'abord, on remarque que, issues d'une initialisation différente, les 2 X 5 configurations finales en sortie du procédé d'optimisation bi-niveau selon la présente invention sont des minima locaux différents d'un critère évalué sur la même base, le critère observé étant dans le cas général non convexe. De plus, de tels minima sur la base d'entrainement ne garantissent pas forcément des meilleures performances (erreur plus faible) que dans le cas régulier associés au point 92. Cependant, on remarque qu'il est possible d'obtenir des meilleures performances que le réseau régulier et que le comportement moyen semble donner de meilleurs résultats lorsque l'on travaille avec seulement dix capteurs, ce qui est cohérent avec une démarche de minimisation du nombre de capteurs. Ainsi le procédé proposé selon la présente invention est propre à permettre d'apprendre le positionnement idéal des capteurs dans des cas spécifiques du moment que la base d'entrainement est représentative des défauts à reconstruire.

L'homme du métier comprendra que l'invention ne se limite pas aux modes de réalisation décrits, ni aux exemples particuliers de la description, les modes de réalisation et les variantes mentionnées ci-dessus étant propres à être combinés entre eux pour générer de nouveaux modes de réalisation de l'invention selon l'étendue de la protection des revendications annexées.

Ainsi, la présente invention propose un procédé et un dispositif d'optimisation bi-niveau de la localisation d'un ensemble de capteurs de détection de défaut(s) dans une structure par tomographie à ondes élastiques guidées qui permet de déterminer astucieusement le placement des capteurs en apprenant au moyen d'une optimisation bi-niveau le placement de l'ensemble de capteurs qui permet de reconstruire au mieux les N défauts correctement caractérisés au préalable au sein de la base de données

Cette technique d'apprentissage possède un avantage dans le fait qu'elle peut être adaptative aux types de défauts que l'on cherche à reconstruire. Par exemple, le positionnement optimal des capteurs pour analyser des fissures apparaissant horizontalement ne serait pas le même que celui pour analyser des défauts de corrosion à peu près circulaire. Toute information a priori peut donc permettre d'améliorer les performances via la base de données d'apprentissage et de test (i.e. la base de données d'entrainement).

L'invention permet de choisir astucieusement le placement des capteurs pour maximiser l'information issue de chacun tout en limitant leur nombre. En effet, en tomographie par onde guidée classique, pour atteindre une qualité de reconstruction des défauts maximale, il faut placer un capteur toutes les demies longueurs d'ondes. En faisant cela, la solution proposée permet à nombre de capteurs donné de placer les capteurs pour optimiser les performances de reconstruction de défauts sur une base de défauts. Toute information à priori transmise par l'utilisateur pour la création de la base d'entrainement (par exemple : taille, forme, positionnement des défauts ...) permet d'augmenter les performances de la présente invention, ce qui est avantageux pour des applications dans le domaine du contrôle de santé de structure ou SHM (de l'anglais *Structural Health Monitoring*) visant à détecter et à caractériser des dommages (i.e. anomalies) de structures/infrastructures telles que des tuyauteries métalliques ou composite pour le nucléaire, du secteur « Oil & Gas », l'aéronautique, l'éolien, etc..

**Revendications**

1. Procédé (28) d'optimisation bi-niveau de la localisation d'un ensemble de capteurs de détection de défaut(s) dans une structure par tomographie à ondes élastiques guidées, les capteurs dudit ensemble étant disposés sur ladite structure,

   ledit procédé étant **caractérisé en ce qu'**il comprend une optimisation bi-niveau, ladite optimisation bi-niveau comprenant :

      - une phase d'initialisation (30) d'une configuration de détection de référence, et de génération d'une base de donnée comprenant respectivement un nombre prédéterminé N d'images de référence distinctes de cartographies de l'épaisseur de ladite structure présentant respectivement N défauts distincts d'une image à l'autre,

   l'initialisation (30) de la configuration de détection de référence comprenant la définition des éléments appartenant au groupe comprenant au moins les éléments suivants :

      - la taille de zone de la structure à inspecter au moyen de ladite détection ;
      - la longueur d'onde d'intérêt ;
      - le positionnement initial desdits capteurs ;

   et jusqu'à convergence selon un critère d'arrêt prédéterminé, au moins une itération (38) des étapes successives suivantes :

      - pour une localisation courante dudit ensemble de capteurs associée à ladite itération, et pour chacun desdits N défauts distincts, obtention (40), par simulation, de données propres à être mesurées par ledit ensemble de capteurs positionnés selon ladite localisation,

- à partir desdites données, et pour chacun desdits N défauts distincts, résolution (42) et obtention d'une solution d'un problème bas-niveau de reconstruction par tomographie dudit défaut considéré, ladite solution correspondant à l'image reconstruite de la cartographie de l'épaisseur de ladite structure présentant ledit défaut considéré;

- à partir desdites N images reconstruites associées respectivement à chacun desdits N défauts distincts et à partir des N images de référence de la base de donnée associées respectivement à chacun desdits N défauts distincts, détermination (44) d'un critère associé à un problème haut-niveau d'optimisation de la qualité de reconstruction desdits N défauts distincts, ledit critère de haut niveau étant la qualité de la reconstruction sur l'ensemble desdits N défauts distincts,

- détermination (46) du gradient dudit critère associé au problème haut-niveau, le gradient dudit critère dépendant d'un jeu de paramètres p, à savoir le jeu des positions des capteurs,

- déplacement (52) de chaque capteur proportionnellement à la valeur dudit gradient dudit critère associée à chaque capteur et obtention de la localisation de chaque capteur à utiliser lors de l'itération suivante.

**2.** Procédé (28) selon la revendication 1, dans lequel ledit groupe comprend en outre au moins les éléments suivants :

- le nombre de capteurs théoriquement nécessaires à ladite détection ;
- le nombre de capteurs utilisés en pratique

**3.** Procédé (28) selon la revendication 2, dans lequel ledit positionnement initial desdits capteurs correspond à une disposition circulaire régulière desdits capteurs.

**4.** Procédé (28) selon la revendication 3, dans lequel ladite phase d'initialisation comprend en outre l'obtention d'une asymétrie dudit positionnement initial par application d'un déplacement de valeur prédéterminée selon une direction aléatoire de chacun desdits capteurs.

**5.** Procédé (28) selon l'une quelconque des revendications précédentes, dans lequel la détermination (46) du gradient dudit critère comprend :

pour chacun desdits N défauts distincts :

- la détermination (47), d'un double gradient dudit premier problème d'optimisation bas-niveau, par différenciation du gradient dudit premier problème d'optimisation bas-niveau en fonction de ses paramètres ;

- la détermination (48) d'une matrice hessienne associée en fonction des données respectivement issues de ladite base de donnée, ladite matrice hessienne étant inversible,

- à partir de ladite matrice hessienne, la détermination (49) d'une matrice jacobienne selon une relation d'obtention prédéterminée ; et

- à partir de l'ensemble des matrices jacobiennes respectivement associées à chacun desdits N défauts distincts, détermination (50) du gradient dudit critère.

**6.** Procédé (28) selon l'une quelconque des revendications précédentes, dans lequel ledit critère d'arrêt prédéterminé correspond à :

- une norme euclidienne du gradient du problème haut-niveau inférieure à un seuil prédéterminé ; ou
- l'atteinte d'un nombre maximal d'itérations prédéterminé.

**7.** Procédé (28) selon la revendication 6, dans lequel ledit seuil prédéterminé correspond à une fraction prédéterminée d'une longueur d'onde d'intérêt initialisée lors de la phase d'initialisation de ladite configuration de détection de référence.

**8.** Procédé (28) selon l'une quelconque des revendications précédentes, dans lequel ladite base de donnée est reconfigurable en fonction d'une information sur un type de défaut a priori à détecter.

**9.** Système de détection d'anomalie(s) dans une structure par tomographie à ondes guidées au moyen d'un ensemble de capteurs, les capteurs dudit ensemble étant disposés sur ladite structure, ledit système étant **caractérisé en ce qu'**il comprend :

- ledit ensemble de capteurs ;
- un dispositif électronique d'optimisation du placement dudit ensemble de capteurs ;
- un module de détection d'anomalies par tomographie à ondes guidées configuré pour utiliser les mesures dudit ensemble de capteurs afin de fournir une tomographie de ladite structure

ledit dispositif comprenant une unité d'optimisation bi-niveau, ladite unité d'optimisation bi-niveau comprenant :

- un module d'initialisation (12) configuré pour initialiser une configuration de détection de référence, et configuré pour générer une base de donnée comprenant respectivement un nombre prédéterminé N d'images de référence distinctes de cartographies de l'épaisseur de ladite structure présentant respectivement N défauts distincts d'une image à l'autre, l'initialisation de la configuration de détection de référence comprenant la définition des éléments appartenant au groupe comprenant au moins les éléments suivants :

- la taille de zone de la structure à inspecter au moyen de ladite détection ;
- la longueur d'onde d'intérêt ;
- le positionnement initial desdits capteurs ;

et mis en œuvre itérativement ; jusqu'à convergence selon un critère d'arrêt prédéterminé, les éléments suivants :

- un module d'obtention (14) configuré, pour une localisation courante dudit ensemble de capteurs associée à ladite itération, et pour chacun desdits N défauts distincts, obtenir, par simulation, des données propres à être mesurées par ledit ensemble de capteurs positionnés selon ladite localisation,
- un module de résolution (16) configuré pour résoudre et obtenir, à partir desdites données, et pour chacun desdits N défauts distincts, une solution d'un problème bas-niveau de reconstruction par tomographie dudit défaut considéré, ladite solution correspondant à l'image reconstruite de la cartographie de l'épaisseur de ladite structure présentant ledit défaut considéré;
- un premier module de détermination (18) configuré pour déterminer, à partir desdites N images reconstruites associées respectivement à chacun desdits N défauts distincts et à partir des N images de référence de la base de donnée associées respectivement à chacun desdits N défauts distincts, un critère associé à un problème haut-niveau de la qualité de reconstruction desdits N défauts distincts, ledit critère de haut-niveau étant la qualité de la reconstruction sur l'ensemble desdits N défauts distincts,
- un deuxième module de détermination (19) configuré pour déterminer le gradient dudit critère, le gradient dudit critère dépendant d'un jeu de paramètres p, à savoir le jeu des positions des capteurs,
- un module de déplacement (20) configuré pour déplacer chaque capteur proportionnellement à la valeur dudit gradient dudit critère associée à chaque capteur et pour obtenir la localisation de chaque capteur à utiliser lors de l'itération suivante.

**10.** Système selon la revendication 9, dans lequel les capteurs dudit ensemble sont selon l'un des types appartenant au groupe comprenant au moins :

- les capteurs piézoélectriques ;
- les capteurs EMAT ;
- les capteurs FBG ;
- les capteurs PVDF.

**11.** Système selon la revendication 9 ou 10, dans lequel le système est propre à fonctionner en :

- mode actif selon lequel les capteurs génèrent et mesurent les ondes guidées, ou en
- mode passif selon lequel les capteurs sont configurés pour mesurer les ondes guidées présentes dans la structure naturellement durant son exploitation, les signaux mesurés par lesdits capteurs en mode passif étant propres à être utilisés pour déterminer une fonction représentative de la réponse impulsionnelle de ladite structure.

**12.** Système selon l'une quelconque des revendications 9 à 11 dans lequel le module de détection d'anomalies par tomographie à ondes guidées configuré pour utiliser les mesures dudit ensemble de capteurs afin de fournir une tomographie de ladite structure comprend un solveur permettant la résolution d'un problème de minimisation sous la forme :

$$\hat{O} = \operatorname*{argmin}_{O} \frac{1}{2} \|\varphi - \Phi(O)\|_2^2 + R(O)$$

où $O$ représente la fonction objet caractérisant un défaut de ladite structure, $R$ est un terme de pénalité permettant la régularisation de la solution, $\varphi$ représente les champs mesurés via lesdits capteurs dudit ensemble, $\Phi$ représente un modèle suivant une équation de Lippmann Schwinger :

$$\Phi(x_j, x_i) - \Phi^0(x_j, x_i) = \iint_{\Omega} G_0(x_j, x) O(x) \Phi(x, x_i) d^2x$$

$G_0$ étant la fonction de Green, solution de l'équation de Helmholtz associée à l'état sain de ladite structure.

13. Programme d'ordinateur comportant des instructions logicielles qui lorsqu'elles sont exécutées par un ordinateur, comprenant des instructions qui conduisent le système selon l'une des revendications 9 à 12 à exécuter les étapes de la méthode selon l'une des revendications 1 à 8.

**Patentansprüche**

1. Verfahren (28) zur Bilevel-Optimierung der Lokalisierung eines Satzes von Sensoren zur Detektion von Fehler(n) in einer Struktur mittels Tomographie mit geführten elastischen Wellen, wobei die Sensoren des Satzes auf der Struktur angeordnet sind,

   wobei das Verfahren **dadurch gekennzeichnet ist, dass** es eine Bilevel-Optimierung umfasst, wobei die Bilevel-Optimierung umfasst:

   - eine Initialisierungsphase (30) einer Referenz-Detektionskonfiguration und der Erzeugung einer Datenbank, die jeweils eine vorbestimmte Anzahl N unterschiedlicher Referenzbilder von Dickenkarten der Struktur umfasst, die jeweils N von einem Bild zum anderen unterschiedliche Fehler aufweisen,
   wobei die Initialisierung (30) der Referenz-Detektionskonfiguration die Definition der Elemente umfasst, die zu der Gruppe gehören, die zumindest die folgenden Elemente umfasst:

   - die Größe des Bereichs der Struktur, der mittels der Detektion zu inspizieren ist;
   - die interessierende Wellenlänge;
   - die anfängliche Positionierung der Sensoren;
   und bis zur Konvergenz gemäß einem vorbestimmten Abbruchkriterium mindestens eine Iteration (38) der folgenden aufeinanderfolgenden Schritte:

   - für eine aktuelle Lokalisierung des Satzes von Sensoren, die der Iteration zugeordnet ist, und für jeden der N unterschiedlichen Fehler, Erhalten (40), durch Simulation, von Daten, die von dem gemäß der Lokalisierung positionierten Satz von Sensoren gemessen werden können,
   - ausgehend von den Daten und für jeden der N unterschiedlichen Fehler, Lösen (42) und Erhalten einer Lösung eines untergeordneten Problems der Rekonstruktion des betrachteten Fehlers durch Tomographie, wobei die Lösung dem rekonstruierten Bild der Dickenkarte der Struktur entspricht, die den betrachteten Fehler aufweist;
   - ausgehend von den N rekonstruierten Bildern, die jeweils einem der N unterschiedlichen Fehler zugeordnet sind, und ausgehend von den N Referenzbildern der Datenbank, die jeweils einem der N unterschiedlichen Fehler zugeordnet sind, Bestimmen (44) eines Kriteriums, das einem übergeordneten Problem der Optimierung der Rekonstruktionsqualität der N unterschiedlichen Fehler zugeordnet ist, wobei das übergeordnete Kriterium die Qualität der Rekonstruktion über die Gesamtheit der N unterschiedlichen Fehler ist,
   - Bestimmen (46) des Gradienten des Kriteriums, das dem übergeordneten Problem zugeordnet ist, wobei der Gradient des Kriteriums von einem Parametersatz p abhängt, nämlich dem Satz der Positionen der Sensoren,
   - Verschieben (52) jedes Sensors proportional zu dem Wert des Gradienten des Kriteriums, der jedem Sensor zugeordnet ist, und Erhalten der Lokalisierung jedes Sensors, die bei der folgenden Iteration zu verwenden ist.

2. Verfahren (28) nach Anspruch 1, wobei die Gruppe ferner zumindest die folgenden Elemente umfasst:

   - die Anzahl von Sensoren, die theoretisch für die Detektion erforderlich sind;
   - die Anzahl der in der Praxis verwendeten Sensoren

3. Verfahren (28) nach Anspruch 2, wobei die anfängliche Positionierung der Sensoren einer regelmäßigen kreisförmigen Anordnung der Sensoren entspricht.

4. Verfahren (28) nach Anspruch 3, wobei die Initialisierungsphase ferner das Erhalten einer Asymmetrie der anfänglichen Positionierung durch Anwenden einer Verschiebung mit vorbestimmtem Wert in einer zufälligen Richtung jedes der Sensoren umfasst.

5. Verfahren (28) nach einem der vorhergehenden Ansprüche, wobei die Bestimmung (46) des Gradienten des Kriteriums umfasst:
   für jeden der N unterschiedlichen Fehler:

   - die Bestimmung (47) eines Doppelgradienten des ersten untergeordneten Optimierungsproblems durch Differenzieren des Gradienten des ersten untergeordneten Optimierungsproblems nach seinen Parametern;
   - die Bestimmung (48) einer zugeordneten Hesse-Matrix in Abhängigkeit von Daten, die jeweils aus der Datenbank stammen, wobei die Hesse-Matrix invertierbar ist,
   - ausgehend von der Hesse-Matrix, die Bestimmung (49) einer Jacobi-Matrix gemäß einer vorbestimmten Erhaltungsbeziehung; und
   - ausgehend von der Gesamtheit der Jacobi-Matrizen, die jeweils einem der N unterschiedlichen Fehler zugeordnet sind, Bestimmung (50) des Gradienten des Kriteriums.

6. Verfahren (28) nach einem der vorhergehenden Ansprüche, wobei das vorbestimmte Abbruchkriterium entspricht:

   - einer euklidischen Norm des Gradienten des übergeordneten Problems, die kleiner als ein vorbestimmter Schwellenwert ist; oder
   - dem Erreichen einer vorbestimmten maximalen Anzahl von Iterationen.

7. Verfahren (28) nach Anspruch 6, wobei der vorbestimmte Schwellenwert einem vorbestimmten Bruchteil einer interessierenden Wellenlänge entspricht, die während der Initialisierungsphase der Referenz-Detektionskonfiguration initialisiert wird.

8. Verfahren (28) nach einem der vorhergehenden Ansprüche, wobei die Datenbank in Abhängigkeit von einer Information über einen a priori zu detektierenden Fehlertyp rekonfigurierbar ist.

9. System zur Detektion von Anomalie(n) in einer Struktur durch Tomographie mit geführten Wellen mittels eines Satzes von Sensoren, wobei die Sensoren des Satzes auf der Struktur angeordnet sind, wobei das System **dadurch gekennzeichnet ist, dass** es umfasst:

   - den Satz von Sensoren;
   - eine elektronische Vorrichtung zur Optimierung der Platzierung des Satzes von Sensoren;
   - ein Modul zur Detektion von Anomalien durch Tomographie mit geführten Wellen, das dafür konfiguriert ist, die Messungen des Satzes von Sensoren zu verwenden, um eine Tomographie der Struktur bereitzustellen,

     wobei die Vorrichtung eine Bilevel-Optimierungseinheit umfasst, wobei die Bilevel-Optimierungseinheit umfasst:

     - ein Initialisierungsmodul (12), das dafür konfiguriert ist, eine Referenz-Detektionskonfiguration zu initialisieren, und dafür konfiguriert ist, eine Datenbank zu erzeugen, die jeweils eine vorbestimmte Anzahl N unterschiedlicher Referenzbilder von Dickenkarten der Struktur umfasst, die jeweils N von einem Bild zum anderen unterschiedliche Fehler aufweisen,

     wobei die Initialisierung der Referenz-Detektionskonfiguration die Definition der Elemente umfasst, die zu der Gruppe gehören, die zumindest die folgenden Elemente umfasst:

- die Größe des Bereichs der Struktur, der mittels der Detektion zu inspizieren ist;
- die interessierende Wellenlänge;
- die anfängliche Positionierung der Sensoren;

und iterativ implementiert, bis zur Konvergenz gemäß einem vorbestimmten Abbruchkriterium, die folgenden Elemente:

- ein Erhaltungsmodul (14), das dafür konfiguriert ist, für eine aktuelle Lokalisierung des Satzes von Sensoren, die der Iteration zugeordnet ist, und für jeden der N unterschiedlichen Fehler, durch

Simulation Daten zu erhalten, die von dem gemäß der Lokalisierung positionierten Satz von Sensoren gemessen werden können,

- ein Lösungsmodul (16), das dafür konfiguriert ist, ausgehend von den Daten und für jeden der N unterschiedlichen Fehler, eine Lösung eines untergeordneten Problems der Rekonstruktion des betrachteten Fehlers durch Tomographie zu lösen und zu erhalten, wobei die Lösung dem rekonstruierten Bild der Dickenkarte der Struktur entspricht, die den betrachteten Fehler aufweist;
- ein erstes Bestimmungsmodul (18), das dafür konfiguriert ist, ausgehend von den N rekonstruierten Bildern, die jeweils einem der N unterschiedlichen Fehler zugeordnet sind, und ausgehend von den N Referenzbildern der Datenbank, die jeweils einem der N unterschiedlichen Fehler zugeordnet sind, ein Kriterium zu bestimmen, das einem übergeordneten Problem der Qualität der Rekonstruktion der N unterschiedlichen Fehler zugeordnet ist, wobei das übergeordnete Kriterium die Qualität der Rekonstruktion über die Gesamtheit der N unterschiedlichen Fehler ist;
- ein zweites Bestimmungsmodul (19), das dafür konfiguriert ist, den Gradienten des Kriteriums zu bestimmen, wobei der Gradient des Kriteriums von einem Parametersatz p abhängt, nämlich dem Satz der Positionen der Sensoren;
- ein Verschiebungsmodul (20), das dafür konfiguriert ist, jeden Sensor proportional zu dem Wert des Gradienten des Kriteriums, der jedem Sensor zugeordnet ist, zu verschieben und die Lokalisierung jedes Sensors zu erhalten, die bei der folgenden Iteration zu verwenden ist.

10. System nach Anspruch 9,
    wobei die Sensoren des Satzes von einem der Typen sind, die zu der Gruppe gehören, die zumindest umfasst:

    - piezoelektrische Sensoren;
    - EMAT-Sensoren;
    - FBG-Sensoren;
    - PVDF-Sensoren.

11. System nach Anspruch 9 oder 10,
    wobei das System geeignet ist, betrieben zu werden in:

    - einem aktiven Modus, nach dem die Sensoren die geführten Wellen erzeugen und messen, oder in
    - einem passiven Modus, nach dem die Sensoren dafür konfiguriert sind, die geführten Wellen zu messen, die natürlicherweise während ihres Betriebs in der Struktur vorhanden sind, wobei die von den Sensoren im passiven Modus gemessenen Signale geeignet sind, verwendet zu werden, um eine Funktion zu bestimmen, die für die Impulsantwort der Struktur repräsentativ ist.

12. System nach einem der Ansprüche 9 bis 11, wobei das Modul zur Detektion von Anomalien durch Tomographie mit geführten Wellen, das dafür konfiguriert ist, die Messungen des Satzes von Sensoren zu verwenden, um eine Tomographie der Struktur bereitzustellen, einen Solver umfasst, der die Lösung eines Minimierungsproblems in der Form ermöglicht:

$$\bar{O} = \operatorname*{argmin}_{O} \frac{1}{2} \|\varphi - \Phi(O)\|_2^2 + R(O)$$

wobei O die Objektfunktion darstellt, die einen Fehler der Struktur charakterisiert, R ein Strafterm ist, der die Regularisierung der Lösung ermöglicht, $\varphi$ die über die genannten Sensoren des Satzes gemessenen Felder darstellt,

$\Phi$ ein Modell gemäß einer Lippmann-Schwinger-Gleichung darstellt:

$$\Phi\left(x_j, x_t\right) - \Phi^0\left(x_j, x_i\right) = \iint_{\Omega} G_0\left(x_j, x\right) O(x) \Phi\left(x, x_t\right) d^2 x$$

wobei $G_0$ die Greensche Funktion ist, Lösung der Helmholtz-Gleichung, die dem gesunden Zustand der Struktur zugeordnet ist.

13. Computerprogramm mit Softwareanweisungen, die, wenn sie von einem Computer ausgeführt werden, Anweisungen umfassen, die das System nach einem der Ansprüche 9 bis 12 veranlassen, die Schritte des Verfahrens nach einem der Ansprüche 1 bis 8 auszuführen.

**Claims**

1. A method (28) for bi-level optimization of the location of a set of sensors for detecting defect(s) in a structure by guided elastic-wave tomography, the sensors of said set being arranged on said structure,
said method being **characterized in that** it comprises a bi-level optimization, said bi-level optimization comprising:

- an initialization phase (30) of a reference detection configuration, and of generation of a database respectively comprising a predetermined number N of distinct reference images of maps of the thickness of said structure respectively exhibiting N defects that are distinct from one image to another,

the initialization (30) of the reference detection configuration comprising the definition of the elements belonging to the group comprising at least the following elements:

- the size of the zone of the structure to be inspected by means of said detection;
- the wavelength of interest;
- the initial positioning of said sensors;

and, until convergence according to a predetermined stopping criterion, at least one iteration (38) of the following successive steps:

- for a current location of said set of sensors associated with said iteration, and for each of said N distinct defects, obtaining (40), by simulation, data suitable for being measured by said set of sensors positioned according to said location,
- from said data, and for each of said N distinct defects, solving (42) and obtaining a solution to a low-level problem of tomographic reconstruction of said defect under consideration, said solution corresponding to the reconstructed image of the map of the thickness of said structure exhibiting said defect under consideration;
- from said N reconstructed images respectively associated with each of said N distinct defects and from the N reference images of the database respectively associated with each of said N distinct defects, determining (44) a criterion associated with a high-level problem of optimizing the reconstruction quality of said N distinct defects, said high-level criterion being the quality of the reconstruction over all of said N distinct defects,
- determining (46) the gradient of said criterion associated with the high-level problem, the gradient of said criterion depending on a set of parameters p, namely the set of positions of the sensors,
- moving (52) each sensor proportionally to the value of said gradient of said criterion associated with each sensor and obtaining the location of each sensor to be used during the following iteration.

2. The method (28) according to claim 1, wherein said group further comprises at least the following elements:

- the number of sensors theoretically necessary for said detection;
- the number of sensors used in practice

3. The method (28) according to claim 2, wherein said initial positioning of said sensors corresponds to a regular circular arrangement of said sensors.

4. The method (28) according to claim 3, wherein said initialization phase further comprises obtaining an asymmetry of said initial positioning by applying a displacement of predetermined value in a random direction of each of said sensors.

5. The method (28) according to any one of the preceding claims, wherein the determination (46) of the gradient of said criterion comprises:
for each of said N distinct defects:

   - determining (47) a double gradient of said first low-level optimization problem, by differentiating the gradient of said first low-level optimization problem as a function of its parameters;
   - determining (48) an associated Hessian matrix as a function of the data respectively obtained from said database, said Hessian matrix being invertible,
   - from said Hessian matrix, determining (49) a Jacobian matrix according to a predetermined obtaining relationship; and
   - from the set of Jacobian matrices respectively associated with each of said N distinct defects, determining (50) the gradient of said criterion.

6. The method (28) according to any one of the preceding claims, wherein said predetermined stopping criterion corresponds to:

   - a Euclidean norm of the gradient of the high-level problem below a predetermined threshold; or
   - the reaching of a predetermined maximum number of iterations.

7. The method (28) according to claim 6, wherein said predetermined threshold corresponds to a predetermined fraction of a wavelength of interest initialized during the initialization phase of said reference detection configuration.

8. The method (28) according to any one of the preceding claims, wherein said database is reconfigurable as a function of information on a type of defect to be detected a priori.

9. A system for detecting anomaly/anomalies in a structure by guided-wave tomography by means of a set of sensors, the sensors of said set being arranged on said structure, said system being **characterized in that** it comprises:

   - said set of sensors;
   - an electronic device for optimizing the placement of said set of sensors;
   - an anomaly detection module by guided-wave tomography configured to use the measurements of said set of sensors in order to provide a tomography of said structure

      said device comprising a bi-level optimization unit, said bi-level optimization unit comprising:

         - an initialization module (12) configured to initialize a reference detection configuration, and configured to generate a database respectively comprising a predetermined number N of distinct reference images of maps of the thickness of said structure respectively exhibiting N defects that are distinct from one image to another,

      the initialization of the reference detection configuration comprising the definition of the elements belonging to the group comprising at least the following elements:

         - the size of the zone of the structure to be inspected by means of said detection;
         - the wavelength of interest;
         - the initial positioning of said sensors;

      and the following elements being implemented iteratively, until convergence according to a predetermined stopping criterion:

         - an obtaining module (14) configured, for a current location of said set of sensors associated with said iteration, and for each of said N distinct defects, to obtain, by simulation, data suitable for being measured

EP 4 599 242 B1

by said set of sensors positioned according to said location,
- a solving module (16) configured to solve and obtain, from said data, and for each of said N distinct defects, a solution to a low-level problem of tomographic reconstruction of said defect under consideration, said solution corresponding to the reconstructed image of the map of the thickness of said structure exhibiting said defect under consideration;
- a first determination module (18) configured to determine, from said N reconstructed images respectively associated with each of said N distinct defects and from the N reference images of the database respectively associated with each of said N distinct defects, a criterion associated with a high-level problem of the reconstruction quality of said N distinct defects, said high-level criterion being the quality of the reconstruction over all of said N distinct defects;
- a second determination module (19) configured to determine the gradient of said criterion, the gradient of said criterion depending on a set of parameters p, namely the set of positions of the sensors;
- a movement module (20) configured to move each sensor proportionally to the value of said gradient of said criterion associated with each sensor and to obtain the location of each sensor to be used during the following iteration.

10. The system according to claim 9,
wherein the sensors of said set are of one of the types belonging to the group comprising at least:

- piezoelectric sensors;
- EMAT sensors;
- FBG sensors;
- PVDF sensors.

11. The system according to claim 9 or 10,
wherein the system is suitable for operating in:

- an active mode in which the sensors generate and measure the guided waves, or in
- a passive mode in which the sensors are configured to measure the guided waves naturally present in the structure during its operation, the signals measured by said sensors in passive mode being suitable for being used to determine a function representative of the impulse response of said structure.

12. The system according to any one of claims 9 to 11, wherein the anomaly detection module by guided-wave tomography configured to use the measurements of said set of sensors in order to provide a tomography of said structure comprises a solver enabling the solution of a minimization problem in the form:

$$\bar{O} = \arg\min_{O} \frac{1}{2} \| \varphi - \Phi(O) \|_2^2 + R(O)$$

where $O$ represents the object function characterizing a defect of said structure, $R$ is a penalty term allowing regularization of the solution, $\varphi$ represents the fields measured via said sensors of said set, $\Phi$ represents a model according to a Lippmann-Schwinger equation:

$$\Phi(x_j, x_i) - \Phi^0(x_j, x_i) = \iint_{\Omega} G_0(x_j, x) O(x) \Phi(x, x_i) d^2 x$$

$G_0$ being the Green's function, solution of the Helmholtz equation associated with the healthy state of said structure.

13. A computer program comprising software instructions which, when they are executed by a computer, comprise instructions that cause the system according to any one of claims 9 to 12 to execute the steps of the method according to any one of claims 1 to 8.

FIG.1

FIG.2

EP 4 599 242 B1

FIG.3

EP 4 599 242 B1

FIG.4

26

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3073289
- FR 3084748
- FR 3105554

**Littérature non-brevet citée dans la description**

- **J. C. P MCKEON ; M. K. HINDERS**. *Parallel projection and crosshole Lamb contact scanning tomography*, 1999
- **F. SIMONETTI ; H. HUANG**. *From beamforming to diffraction tomography*, 2008
- **T. DRUET**. *Autocalibration method for guided wave tomography with undersampled data*, 2019
- **M. CHANG et al.** *Corrosion monitoring using a new compressed sensing-based tomographic method*, 2020
- **Q. BERTRAND et al.** *Implicit differentiation of Lasso-type models for hyperparameter optimization*, 2020
- **F. SIMONETTI et al.** *From beamforming to diffraction tomography*, 2008